# FASCICULE DE BREVET EUROPEEN

(11) **EP 1 527 949 B1**
(45) Date de publication et mention de la délivrance du brevet: **10.03.2010**
(21) Numéro de dépôt: 04292525.5
(22) Date de dépôt: 25.10.2004
(51) Int. Cl.: B60Q 1/076, B60Q 1/10

(54) **Dispositif d'éclairage pour véhicule automobile**
Beleuchtungseinrichtung für Kraftfahrzeuge
Lighting device for motor vehicles

(30) Priorité: 31.10.2003 FR 0312835
(43) Date de publication de la demande: 04.05.2005
(73) Titulaire: VALEO VISION, 93012 Bobigny Cedex (FR)
(72) Inventeur: L'Hermine, Alban, 75005 Paris (FR); Chave, Rémy, 75007 Paris (FR)

(56) Documents cités:
- EP-A- 1 234 716
- FR-A- 2 656 574
- FR-A1- 2 824 303

## Description

La présente invention concerne de manière générale les dispositifs d'éclairage pour véhicules automobiles, et plus particulièrement les dispositifs dans lesquels les projecteurs sont capables d'engendrer un faisceau lumineux orientable, notamment en fonction de différents paramètres.

Ce peut être par exemple un faisceau de croisement, comportant une coupure supérieure de manière à éviter d'éblouir les conducteurs circulant en sens inverse, et dont on désire modifier l'orientation dans un plan vertical par rapport à l'axe longitudinal du véhicule en fonction des changements d'assiette du véhicule. Ce peut être également un faisceau de virage, susceptible d'être décalé angulairement dans un plan horizontal par rapport à l'axe longitudinal du véhicule de manière à éclairer l'intérieur du virage dans lequel circule le véhicule.

On connaît du document FR-A-2 770 185 au nom de la Demanderesse un projecteur comportant un correcteur de la portée du faisceau lumineux émis par ce projecteur, ainsi que des moyens de réglage manuel de cette même portée.

On connaît également du document FR-A-2 760 069 au nom de la Demanderesse un système d'éclairage comportant un projecteur pour l'émission d'un faisceau proche de type code, ainsi qu'un projecteur complémentaire pour l'émission d'un faisceau orientable de virage, les réflecteurs de ces deux projecteurs étant disposés dans un boîtier commun, le réflecteur du projecteur complémentaire de virage étant de type elliptique et étant monté pivotant par rapport à un axe du boîtier, avec une source et une lentille avec lesquelles il coopère pour l'émission du faisceau complémentaire de virage, le système comportant des moyens d'actionnement pour entraîner en pivotement le réflecteur, la source et la lentille autour de l'axe de façon à réaliser la fonction virage.

Après assemblage des différents composants du projecteur dans son boîtier, il est courant d'effectuer un préréglage de ce projecteur. Cette opération consiste à orienter le réflecteur par rapport au boîtier pour lui donner sa position de référence, dans laquelle le faisceau lumineux qu'il émettra lorsque le projecteur sera installé sur le véhicule auquel il est destiné aura une orientation conforme à la réglementation, aussi bien en site qu'en azimut.

Après montage du projecteur sur le véhicule, il est parfois nécessaire d'effectuer un nouveau réglage du projecteur sur le véhicule pour ajuster la direction du faisceau par rapport aux références mécaniques du véhicule, les tolérances de fabrication du projecteur et du véhicule pouvant conduire à une orientation non réglementaire du faisceau lumineux.

Enfin, lors de l'entretien du véhicule ou de visités de contrôle, il peut encore être nécessaire de retoucher l'orientation du réflecteur pour le mettre en conformité avec la réglementation, cette orientation ayant pu être perturbée par des déréglages dûs à des utilisations extrêmes ou anormales du projecteur.

De tels préréglages ou réglages s'effectuent de manière connue à l'aide d'un système de réglage manuel, solidaire du boîtier, commandé à l'aide d'un outil tel qu'un tournevis et entraînant en translation une tige de commande liée au réflecteur.

Le réflecteur est donc susceptible d'être commandé en rotation soit par le système de réglage manuel pour effectuer un réglage statique, soit par des moyens d'actionnement, le plus souvent électriques, pour obtenir un fonctionnement dynamique. Il en résulte que la fixation du réflecteur dans le boîtier peut s'avérer complexe, et nuisible à la fiabilité du projecteur.

On connaît par ailleurs du document FR-A-2 656 574 un projecteur selon le préambule de la revendication 1, comprenant dans un boîtier un réflecteur pivotant par rapport au boîtier sous l'effet d'un dispositif d'actionnement linéaire électromécanique comprenant un boîtier extérieur enfermant un moteur réversible à courant continu pour déplacer axialement une tige de commande et un dispositif faisant partie intégrante du boîtier extérieur pour détecter la position axiale de la tige de commande. En service, la position initiale du réflecteur est réglée à la main en actionnant le moteur à courant continu jusqu'à ce que le réflecteur ait atteint la position désirée. Le moteur est alors arrêté, l'opérateur devant alors manoeuvrer un arbre auxiliaire pour amener le détecteur de position de la tige de commande en position médiane, correspondant à la valeur zéro. Un tel réglage de la position du réflecteur peut donc s'avérer relativement complexe,

La présente invention se place dans ce contexte et elle a pour but de proposer un projecteur, pouvant émettre un faisceau orientable sous l'effet de moyens d'actionnement, dans lequel la position de référence du module d'émission de lumière par rapport au véhicule qu'il équipe puisse être facilement ajustée, le montage du module d'émission de lumière dans le boîtier devant s'effectuer de façon simple.

La présente invention a donc pour objet un dispositif d'éclairage selon la revendication 1.

Selon la présente invention, le réglage statique de la position de référence du module d'émission de lumière est effectué par les moyens d'actionnement dynamiques par comparaison avec la position mémorisée dans le dispositif de mémoire.

Selon d'autres caractéristiques avantageuses et non limitatives de l'invention :
- l'axe de rotation du module d'émission de lumière est vertical, le module d'émission de lumière étant mobile pour former un faisceau de virage.
- l'axe de rotation du module d'émission de lumière est horizontal, le module d'émission de lumière étant mobile pour effecteur une correction en site en fonction de l'assiette du véhicule.

D'autres buts, caractéristiques et avantages de la présente invention ressortiront clairement de la description qui va maintenant être faite d'un exemple de réalisation donné à titre non limitatif en référence aux dessins annexés sur lesquels :
- La Figure 1 représente une vue en coupe d'un projecteur selon une conception connue, par exemple par le premier des documents précités, et
- La Figure 2 représente une vue en coupe d'un projecteur réalisé conformément à la présente invention ;

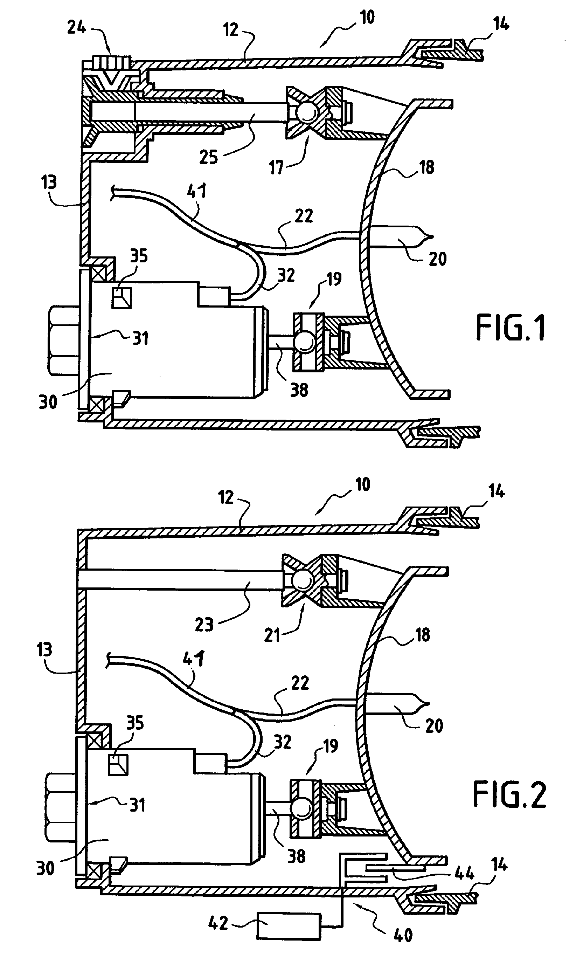

Le projecteur 10 représenté sur la Figure 1 comporte un boîtier 12 fermé à l'avant par une glace 14. Un réflecteur 18 est placé à l'intérieur du boîtier et porte une lampe 20. La lampe 20 est alimentée en électricité par des câbles 22.

Le réflecteur 18 et la lampe 20 forment ensemble un module d'émission de lumière 18 pour le projecteur 10. Dans la suite de la présente description, on utilisera l'expression module d'émission de lumière pour désigner un tel agencement, ou l'ensemble d'un réflecteur de type elliptique, d'une source lumineuse et d'une lentille, éventuellement complété d'un cache destiné à former une coupure dans le faisceau final, ou encore un ensemble d'émission de la lumière émise par au moins une diode électroluminescente.

Le module d'émission de lumière 18 est monté dans le boîtier 12 en trois points : un point fixe (non représenté) ainsi qu'un premier point mobile 17 et un second point mobile 19.

Le projecteur 10 comporte un système de réglage manuel 24 qui entraîne en translation une tige de commande 25 liée au module d'émission de lumière 18 au niveau du premier point mobile 17.

Le projecteur 10 comporte également un actionneur 30 situé pour l'essentiel sur la paroi arrière 13 du boîtier 12 qui entraîne en translation une tige de sortie 38 liée au module d'émission de lumière au niveau du second point mobile 19. L'actionneur 30 peut entraîner la tige de sortie 38 dans un sens ou dans l'autre à partir d'une position centrale neutre, de façon à entraîner en rotation le module d'émission de lumière.

Si cet axe de rotation est vertical, la rotation du module d'émission de lumière aura pour effet d'assurer une fonction virage, et la Figure 1 est alors une coupe horizontale du projecteur 10. Si l'axe de rotation est horizontal, la rotation du module d'émission de lumière aura pour effet d'assurer une fonction de correction en site du projecteur, et la Figure 1 est alors une coupe verticale du projecteur 10

La fixation du module d'émission de lumière 18 au niveau des points mobiles de montage 17, 19 est réalisée par des moyens connus utilisant une rotule à l'extrémité des tiges 25, 38 et des sièges de rotule correspondants liés au module d'émission de lumière 18.

L'actionneur 30 a une forme globalement cylindrique à axe parallèle à la tige de sortie 38. Dans sa partie d'extrémité 31 opposée à la tige 38, l'actionneur 30 est fixé sur le boîtier 12 par cette partie d'extrémité au moyen par exemple de pions 35 saillants de l'actionneur 30 qui permettent une fixation du type baïonnette.

L'actionneur 30 est alimenté par un faisceau de câbles 32, qui est de façon avantageuse réuni au faisceau de câbles 22 pour former un faisceau unique 41 qui se terminera au niveau d'un connecteur étanche unique (non représenté) au niveau du passage du boîtier.

Une telle disposition présente plusieurs inconvénients. Tout d'abord, le module d'émission de lumière étant maintenu par un point fixe et deux points mobiles, pourra être sujet à des déréglages fréquents du fait de ces deux points mobiles.

D'autre part, après assemblage du projecteur de la Figure 1, l'axe optique du module d'émission de lumière 18 est dirigé dans une direction différente de la position optique de référence, c'est à dire de la position optique théorique, dans laquelle le projecteur émet un faisceau lumineux conforme à la réglementation. Il est alors nécessaire d'orienter le module d'émission de lumière dans cette position optique de référence.

Une telle opération est effectuée à l'aide du système de réglage manuel 24, dont l'organe de commande est actionné manuellement de manière à ce que la tige 25 communique l'orientation correcte au module d'émission de lumière 18. Cette orientation est correcte pour la position dans laquelle se trouve, au moment du réglage manuel, la tige 38. En l'absence d'alimentation électrique, cette tige 38 occupe normalement sa position centrale neutre. Si ce n'est pas le cas, le module d'émission de lumière 18 aura son orientation correcte pour une position autre que la position centrale neutre de la tige 38 de l'actionneur 30. Il en résulte alors que la tige 38 pourra avoir une course plus longue d'un côté de cette position centrale que de l'autre côté, et que le projecteur ne remplira plus la fonction pour laquelle il a été conçu.

Conformément à la présente invention, ces inconvénients sont évités grâce au projecteur de la Figure 2. Sur cette Figure, les mêmes éléments que ceux de la Figure 1 portent les mêmes signes de référence.

On voit sur cette Figure que le point de maintien supérieur 17 du module d'émission de lumière 18 n'est plus mobile, mais il est remplacé par un point fixe 21. Ce point fixe 21 peut par exemple être formé à l'extrémité d'une tige 23, solidaire du boîtier 12, et à l'extrémité de laquelle est formée une rotule coopérant avec un siège de rotule lié au module d'émission de lumière 18. L'actionneur 30 continue à jouer son rôle de mise en rotation du module d'émission de lumière 18.

Pour effectuer le préréglage initial statique du projecteur après son assemblage, le réglage statique du projecteur après installation sur le véhicule ou lors d'opérations d'entretien ou de maintenance, il suffit de commander l'actionneur 30 pour qu'il dirige le module d'émission de lumière 18 selon l'orientation correcte. Cette orientation correcte peut être mesurée sur un écran (non représenté) placé à distance du projecteur 10, ou à l'aide d'un appareillage de contrôle. L'actionneur 30 est alors mis au repos lorsque le réglage est estimé satisfaisant.

Cependant, l'actionneur 30 peut également être utilisé pour mettre le module d'émission de lumière 18 en mouvement de manière dynamique, par exemple pour modifier l'orientation du faisceau lumineux dans un plan vertical en fonction des changements d'assiette du véhicule, ou pour décaler angulairement dans un plan horizontal le faisceau lumineux de manière à éclairer l'intérieur du virage dans lequel circule le véhicule.

Il est alors nécessaire qu'après ces phases de fonctionnement dynamique, lorsque le véhicule roule en ligne droite et que son assiette reste constante, le faisceau lumineux revienne dans sa position réglementaire, le retour à la position initiale étant effectué par l'actionneur 30.

Pour ce faire, il est nécessaire de ne commander l'actionneur que de la quantité suffisante pour qu'il reprenne sa position nominale. On aura au préalable mémorisé cette position de repos de l'actionneur dans une mémoire 42. La mémoire 42 a été représentée séparément pour la clarté du dessin. Il est bien clair qu'elle pourra être intégrée aux moyens de commande de l'orientation du module d'émission de lumière.

L'actionneur étant constitué d'un moteur pas à pas, on aura mémorisé le nombre de pas qui séparent cette position nominale d'une position de référence dans laquelle par exemple le moteur pas à pas vient en butée extrême. Dans d'autres cas, qui ne font cependant pas partie de la présente invention, on pourra utiliser un potentiomètre de recopie de la position du module d'émission de lumière, ainsi qu'on l'a représenté par le dispositif 40 de la Figure 2. Un tel dispositif 40 peut être constitué d'un élément 44 solidaire du module d'émission de lumière, et d'un élément 46 solidaire du boîtier 12, de telle manière à générer à tout instant un signal représentatif de l'orientation du module d'émission de lumière par rapport à la position de référence.

Pour effectuer un réglage manuel, il suffit alors de repérer la position actuelle du miroir, de comparer cette position avec la position de référence mémorisée dans la mémoire 42, puis de commander l'actionneur 30 pour qu'il remette le miroir dans cette position de référence.

On a donc bien réalisé selon la présente invention un projecteur, pouvant émettre un faisceau orientable sous l'effet de moyens d'actionnement, dans lequel la position de référence du module d'émission de lumière peut être facilement ajustée grâce à la commande par l'actionneur, le montage du module d'émission de lumière dans le boîtier s'effectuant de façon simple.

Bien entendu, la présente invention n'est pas limitée aux modes de réalisation qui ont été décrits, mais l'homme du métier pourra au contraire lui apporter de nombreuses modifications selon les revendications annexées.

## Revendications

1. Dispositif d'éclairage pour véhicule automobile, comprenant dans un boîtier (12) un module d'émission de lumière (18) coopérant avec une source lumineuse (20) pour former un faisceau lumineux, le module d'émission de lumière (18) étant capable d'adopter une position angulaire prédéterminée par rapport à une position de référence par pivotement autour d'au moins un axe sous l'effet de moyens d'actionnement dynamique (30), des moyens de réglage statique (24) de la position de référence du module d'émission de lumière étant prévus, les moyens d'actionnement dynamique (30) assurent également le réglage statique du module d'émission de lumière (18), la position de référence du module d'émission de lumière (18) étant mémorisée dans un dispositif de mémoire (42) **caractérisé en ce que** le réglage statique de la position de référence du module d'émission de lumière (18) est effectué par les moyens d'actionnement dynamiques (30) par comparaison avec la position mémorisée dans le dispositif de mémoire (42) et **en ce que** les moyens d'actionnement (30) comportent un moteur pas à pas dont le nombre de pas séparant la position de référence, établie lors du réglage statique, d'une position de butée extrême est mis en mémoire.

2. Dispositif d'éclairage selon la revendication 1, **caractérisé en ce que** l'axe de rotation du module d'émission de lumière (18) est vertical.

3. Dispositif d'éclairage selon la revendication 2, **caractérisé en ce que** le module d'émission de lumière est mobile pour former un faisceau de virage.

4. Dispositif d'éclairage selon la revendication 1, **caractérisé en ce que** l'axe de rotation du module d'émission de lumière (18) est horizontal.

5. Dispositif d'éclairage selon la revendication 4, **caractérisé en ce que** le module d'émission de lumière est mobile pour effecteur une correction en site en fonction de l'assiette du véhicule.

## Claims

1. Lighting device for a motor vehicle, comprising in a housing (12) a light emission module (18) which co-operates with a source of light (20) in order to form a light beam, the light emission module (18) being able to adopt a predetermined angular position relative to a reference position, by pivoting around at least one axis under the effect of dynamic activation means (30), means (24) for static regulation of the reference position of the light emission module being provided, the dynamic activation means (30) also assure the static regulation of the light emission module (18), the reference position of the light emission module (18) being stored in a memory device (42), **characterised in that** the static regulation of the reference position of the light emission module (18) is carried out by the dynamic activation means (30) by comparison with the position stored in the memory device (42), and **in that** the activation means (30) comprise a step-by-step motor, the number of steps of which that separate the reference position, established during the static regulation, from an end stop position, is stored in the memory.

2. Lighting device according to claim 1, **characterised in that** the axis of rotation of the light emission module (18) is vertical.

3. Lighting device according to claim 2, **characterised in that** the light emission module is movable, in order to form a bending beam.

4. Lighting device according to claim 1, **characterised in that** the axis of rotation of the light emission module (18) is horizontal.

5. Lighting device according to claim 4, **characterised in that** the light emission module is movable in order to carry out correction in situ, according to the position of the vehicle.

## Patentansprüche

1. Kraftfahrzeug-Beleuchtungsvorrichtung, die in einem Gehäuse (12) ein Lichtemissionsmodul (18) umfasst, das mit einer Lichtquelle (20) zum Bilden eines Lichtbündels zusammenwirkt, wobei das Lichtemissionsmodul (18) durch Schwenken um wenigstens eine Achse unter Einwirkung dynamischer Betätigungsmittel (30) eine vorbestimmte Winkelstellung bezüglich einer Bezugsposition einzunehmen vermag, wobei Mittel (24) zum statischen Verstellen der Bezugsposition des Lichtemissionsmoduls vorgesehen sind, wobei die dynamischen Betätigungsmittel (30) gleichfalls das statische Verstellen des Lichtemissionsmoduls (18) gewährleisten, wobei die Bezugsposition des Lichtemissionsmoduls (18) in einer Speichervorrichtung (42) gespeichert ist,
**dadurch gekennzeichnet, dass** das statische Verstellen der Bezugsposition des Lichtemissionsmoduls (18) durch die dynamischen Betätigungsmittel (30) durch Vergleich mit der in der Speichervorrichtung (42) gespeicherten Position erfolgt, und dass die Betätigungsmittel (30) einen Schrittmotor aufweisen, dessen Anzahl der Schritte, die zwischen der beim statischen Verstellen festgelegten Bezugsposition und einer äußersten Anschlagsposition liegen, gespeichert wird.

2. Beleuchtungsvorrichtung nach Anspruch 1,
**dadurch gekennzeichnet, dass** die Drehachse des Lichtemissionsmoduls (18) vertikal ist.

3. Beleuchtungsvorrichtung nach Anspruch 2,
**dadurch gekennzeichnet, dass** das Lichtemissionsmodul beweglich ist, um ein Kurvenlicht zu bilden.

4. Beleuchtungsvorrichtung nach Anspruch 1,
**dadurch gekennzeichnet, dass** die Drehachse des Lichtemissionsmoduls (18) horizontal ist.

5. Beleuchtungsvorrichtung nach Anspruch 4,
**dadurch gekennzeichnet, dass** das Lichtemissionsmodul beweglich ist, um eine Höhenregelung in Abhängigkeit des Fahrzeugniveaus vorzunehmen.
